# EUROPÄISCHE PATENTSCHRIFT

(11) **EP 1 611 339 B1**
(45) Veröffentlichungstag und Bekanntmachung des Hinweises auf die Patenterteilung: **30.05.2007**
(21) Anmeldenummer: 04717591.4
(22) Anmeldetag: 05.03.2004
(51) Int. Cl.: F02M 37/22

(54) **KRAFTSTOFFFILTER FÜR EIN KRAFTFAHRZEUG**
FUEL FILTER FOR A MOTOR VEHICLE
FILTRE A CARBURANT POUR VEHICULE A MOTEUR

(30) Priorität: 04.04.2003 DE 10315506
(43) Veröffentlichungstag der Anmeldung: 04.01.2006
(73) Patentinhaber: SIEMENS AKTIENGESELLSCHAFT, 80333 München (DE)
(72) Erfinder: EPPING, Florian, 65719 Hofheim (DE); WEHNER, Holger, 65812 Bad Soden (DE)
(86) Internationale Anmeldenummer: PCT/EP2004/002267
(87) Internationale Veröffentlichungsnummer: WO 2004/088117

(56) Entgegenhaltungen:
- EP-A- 1 287 871
- WO-A-01/12294
- DE-A- 19 933 205
- FR-A- 2 259 636
- PATENT ABSTRACTS OF JAPAN vol. 2000, no. 05, 14. September 2000 (2000-09-14) -& JP 2000 042308 A (TENNEX CORP), 15. Februar 2000 (2000-02-15) -& DATABASE WPI Section Ch, Week 200019 Derwent Publications Ltd., London, GB; Class A88, AN 2000-216148 XP002283060 & JP 2000 042308 A (TSUCHIYA SEISAKUSHO KK), 15. Februar 2000 (2000-02-15)
- PATENT ABSTRACTS OF JAPAN vol. 2000, no. 13, 5. Februar 2001 (2001-02-05) -& JP 2000 279711 A (TOYO ROKI MFG CO LTD), 10. Oktober 2000 (2000-10-10)

## Beschreibung

Die Erfindung betrifft einen Kraftstofffilter für ein Kraftfahrzeug mit einem in einem Filtergehäuse angeordneten, zwischen zwei Deckscheiben gehaltenen Filtergewebe, mit einem das Filtergewebe radial abstützenden Stützkäfig und mit Anschlussstutzen für Anschlussleitungen, wobei zumindest eine der Deckscheiben einstückig mit zumindest einem Teil des Stützkäfigs gefertigt ist und dass das der Deckscheibe abgewandte Ende des Stützkäfigs mit der anderen Deckscheibe und/oder einem einstückig mit der anderen Deckscheibe verbunden Bauteil gefertigt ist.

Solche Kraftstofffilter werden bei heutigen Kraftfahrzeugen in einer zwischen einer Kraftstoffpumpe und einer Brennkraftmaschine geführten Vorlaufleitung eingesetzt und sind aus der Praxis bekannt. Bei diesen Kraftstofffiltern ist der Stützkörper lose zwischen den Deckscheiben angebracht und die Dichtungen in den Deckscheiben formschlüssig montiert. Die Dichtungen trennen eine Reinseite von einer Schmutzseite des Kraftstofffilters.

Ein Nachteil des bekannten Kraftstofffilters besteht darin, dass er eine große Anzahl von Einzelteilen hat, welche aufwändig zu montieren sind. Die hohe Anzahl der Einzelteile führt daher zu einer kostenintensiven Fertigung des Kraftstofffilters.

Aus der WO 01/12294 A1 ist ein Filter bekannt, dessen Filtergewebe zwischen zwei Deckscheiben angeordnet ist und einen zylinderförmigen Hohlraum umschließt. Ein auf einer weiteren Scheibe angeordneter Stützkäfig ist in dem Hohlraum angeordnet, wobei der Stützkäfig filterbelastet am Filtergehäuse anliegt.

Aus der JP 2000042308 A ist ein Filter bekannt, dessen Filtergewebe mit Deckscheiben und Stützkäfig umspritzt ist. Ein derartiger Filter erfordert auf Grund der einteiligen Bauweise ein aufwendiges Spritzgusswerkzeug, wobei die Herstellung dieses Werkzeugs kostenintensiv ist.

Der Erfindung liegt das Problem zugrunde, einen Kraftstofffilter der eingangs genannten Art so zu gestalten, dass er besonders kostengünstig zu fertigen ist.

Dieses Problem wird erfindungsgemäß dadurch gelöst, dass der Stützkäfig im Wesentlichen senkrecht auf der Deckscheibe angeordnete und voneinander um mehr als ihre eigene Breite beabstandete Streben und parallel zu der Deckscheibe angeordnete Ringe hat und wenn die Streben radial innen oder radial außen an den Ringen vorbeigeführt sind und den von der Deckscheibe am weitesten entfernten Ring überragen.

Durch diese Gestaltung ist der Stützkäfig einstückig mit der Deckscheibe verbunden. Damit erfordert der erfindungsgemäße Kraftstofffilter keinen separat zu fertigenden und zu montierenden Stützkäfig. Hierdurch lässt sich der erfindungsgemäße Kraftstofffilter besonders kostengünstig fertigen. Die einstückige Fertigung der Deckscheibe und des Stützkäfigs stellt zudem sicher, dass die Deckscheiben gegenüber dem vom Stützring abgestützten Filtergewebe zuverlässig ausgerichtet sind. Damit wird vermieden, dass Kraftstoff an dem Filtergewebe vorbei von der Schmutzseite zur Reinseite strömen kann. Weiterhin lassen sich die Deckscheiben einfach zusammenstecken.

Der erfindungsgemäße Kraftstofffilter lässt sich aus Gleichteilen zusammensetzen, wenn die Deckscheiben identische Formen und Abmessungen aufweisen. Der Einsatz von Gleichteilen ermöglicht eine besonders kostengünstige Fertigung des erfindungsgemäßen Kraftstofffilters.

Der erfindungsgemäße Kraftstofffilter gestaltet sich konstruktiv besonders einfach, wenn die Deckscheiben jeweils mit der Hälfte des Stützkäfigs verbunden sind.

Zur Vereinfachung der Ausrichtung der Deckscheiben und des Stützkäfigs zueinander trägt es gemäß einer anderen vorteilhaften Weiterbildung der Erfindung bei, wenn die Streben an ihren freien Enden Führungsstifte aufweisen.

Zur weiteren Vereinfachung der Montage des erfindungsgemäßen Kraftstofffilters trägt es bei, wenn die freien Enden der Streben mit dem gegenüberliegenden Bauteil korrespondierende Mittel zum Verklemmen oder Verrasten aufweisen.

Die Führung des Kraftstoffs erfordert gemäß einer anderen vorteilhaften Weiterbildung der Erfindung einen besonders geringen baulichen Aufwand, wenn zumindest eine der Deckscheiben eine zentrische Ausnehmung hat, wenn einer der Anschlussstutzen in die zentrische Ausnehmung hineinragt und wenn eine Dichtlippe an dem Anschlussstutzen oder der Deckscheibe angeordnet ist und an dem gegenüberliegenden Bauteil anliegt.

Zur weiteren Vereinfachung der Montage des erfindungsgemäßen Kraftstofffilters trägt es bei, wenn die zentrische Ausnehmung eine Einführschräge für den Anschlussstutzen oder einen Verschlussbolzen des Gehäuses aufweist.

Die Abdichtung des Filtergewebes erfordert gemäß einer anderen vorteilhaften Weiterbildung der Erfindung einen besonders geringen Aufwand, wenn das Filtergewebe mit den Deckscheiben verschweißt ist. Vorzugsweise werden das Filtergewebe und die Deckscheiben im Spiegelschweißverfahren gefertigt. Durch die exakte Ausrichtung der Deckscheiben und damit des Stützrings gegenüber dem Filtergewebe wird sichergestellt, dass das Filtergewebe an den Deckscheiben vor dem Spiegelschweißen zuverlässig anliegt. Damit ist die Dichtheit nach dem Spiegelschweißen zuverlässig gewährleistet.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Schnittdarstellung durch einen erfindungsgemäßen Kraftstofffilter,
- Fig.2: eine vergrößerte perspektivische Darstellung einer Deckscheibe des Kraftstofffilters aus Figur 1.

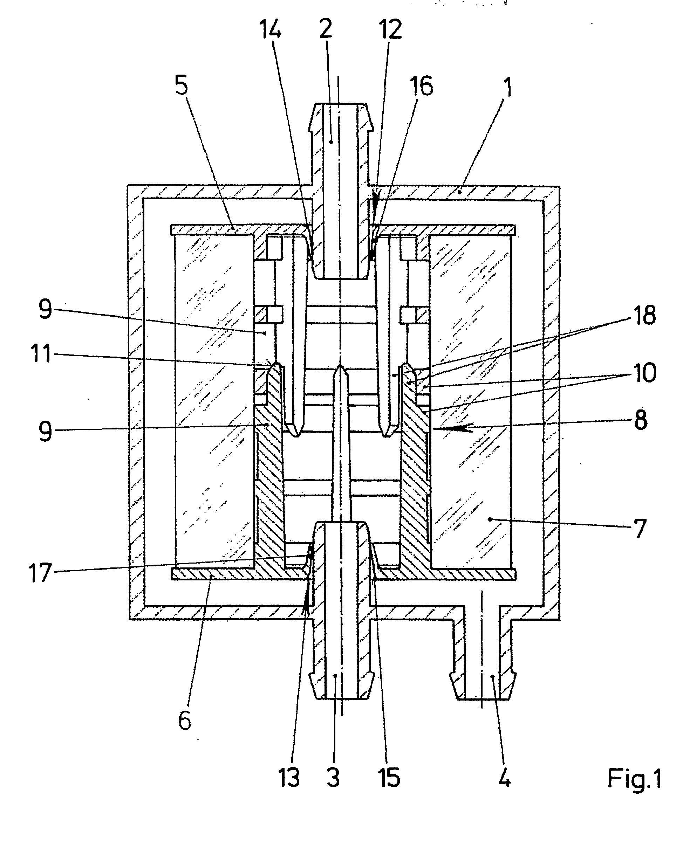

Figur 1 zeigt einen Kraftstofffilter in einem Längsschnitt mit einem Gehäuse 1 und drei Anschlussstutzen 2 - 4. Innerhalb des Gehäuses 1 ist ein zwischen zwei Deckscheiben 5, 6 gehaltenes Filtergewebe 7 angeordnet. Das Filtergewebe 7 wird von einem Stützkäfig 8 radial innen abgestützt. Der Stützkäfig 8 hat rechtwinklig von den Deckscheiben 5, 6 abstehende Streben 9 und mit den Streben 9 verbundene Ringe 10. Die Deckscheiben 5, 6 sind jeweils einstückig mit einer Hälfte des Stützkäfigs 8 gefertigt und beispielsweise im Spiegelschweißverfahren mit dem Filtergewebe 7 verschweißt. Die Streben 9 überragen jeweils den am weitesten von der jeweiligen Deckscheibe 5, 6 entfernten Ring 10 mit Führungsstiften 18 und sind kraftschlüssig mit dem nächsten Ring 10 der gegenüberliegenden Deckscheibe 5, 6 verbunden. Damit sind die Hälften des Stützkäfigs 8 und damit die Deckscheiben 5, 6 kraftschlüssig miteinander verbunden. Zur Vereinfachung der Montage weisen die freien Enden der Streben 9 Einführschrägen 11 auf. Selbstverständlich können die freien Enden der Streben 9 im Bereich der Einführschrägen 11 nicht dargestellte, radial federnde Rasthaken aufweisen, mit denen sie den Ring 10 der gegenüberliegenden Hälfte des Stützkäfigs 8 hintergreifen. Die Deckscheiben 5, 6 sind identisch aufgebaut.

Die Deckscheiben 5, 6 haben jeweils eine zentrische Ausnehmung 12, 13 mit einer Einführschräge 14, 15 und einer Dichtlippe 16, 17. Die Dichtlippe 16, 17 dichtet gegenüber an den zentrisch im Gehäuse 1 angeordneten Anschlussstutzen 2, 3 ab. Damit sind die zentrischen Anschlussstutzen 2, 3 im Gehäuse 1 zunächst mit dem radial innerhalb des Stützkäfigs 8 angeordneten Bereich des Kraftstofffilters verbunden. Der dritte Anschlussstutzen 4 mündet in den von dem Filtergewebe 7 begrenzten radial äußeren Bereich und bildet einen Einlass des Kraftstofffilters. Über den dritten Anschlussstutzen 4 einströmender Kraftstoff passiert das Filtergewebe 7 und gelangt anschließend zu den beiden zentrischen Anschlussstutzen 2, 3. An den beiden zentrischen Anschlussstutzen 2, 3 kann gereinigter Kraftstoff abgeführt werden. In der Regel genügt ein einziger zentrischer Anschlussstutzen 2, 3 zum Abführen des gereinigten Kraftstoffs. In diesem Fall kann einer der zentrischen Anschlussstutzen 2, 3 als dichter Verschlussbolzen des Gehäuses ausgebildet sein und ausschließlich die jeweilige Ausnehmung 12, 13 in der Deckscheibe 5, 6 verschließen. Alternativ kann in den Anschlussstutzen 2,3 ein Druckbegrenzungsventil oder Druckregler montiert werden. Das Gehäuse 1 des Kraftstofffilters ist in der Zeichnung schematisch dargestellt. Selbstverständlich kann das Gehäuse 1 weitere Bauteile wie beispielsweise nicht dargestellte Anschläge zum Abstützen der Deckscheiben 5, 6 aufweisen.

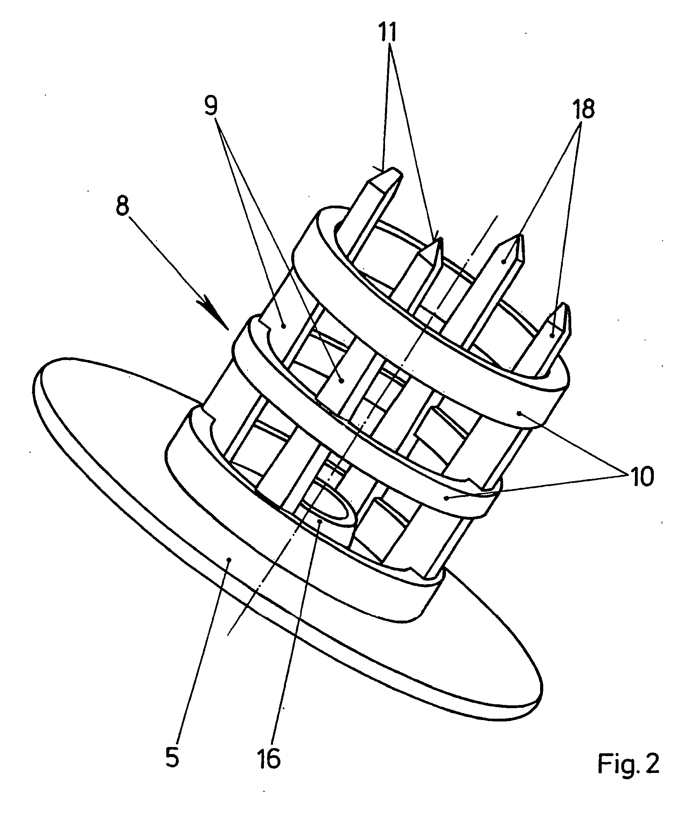

Figur 2 zeigt eine der Deckscheiben 5 des Kraftstofffilters aus Figur 1 in einer perspektivischen Darstellung. Hierbei ist zu erkennen, dass die Streben 9 schmaler sind als die Zwischenräume zwischen den Streben 9. Damit lassen sich die beiden identisch aufgebauten Deckscheiben 5, 6 aus Figur 1 zusammenstecken.

## Patentansprüche

1. Kraftstofffilter für ein Kraftfahrzeug mit einem in einem Filtergehäuse (1) angeordneten , zwischen zwei Deckscheiben (5, 6) gehaltenen Filtergewebe (7), mit einem das Filtergewebe (7) radial abstützenden Stützkäfig (8) und mit Anschlussstutzen (2, 3) für Anschlussleitungen, wobei zumindest eine der Deckscheiben (5, 6) einstückig mit zumindest einem Teil des Stützkäfigs (8) gefertigt ist und dass das der Deckscheibe (5, 6) abgewandte Ende des Stützkäfigs (8) mit der anderen Deckscheibe (5, 6) und/oder einem einstückig mit der anderen Deckscheibe (5, 6) verbundenen Bauteil gefertigt ist, **dadurch gekennzeichnet, dass** der Stützkäfig (8) im Wesentlichen senkrecht auf der Deckscheibe (5, 6) angeordnete und voneinander um mehr als ihre eigene Breite beabstandete Streben (9) und parallel zu der Deckscheibe (5, 6) angeordnete Ringe (10) hat und dass die Streben (9) radial innen oder radial außen an den Ringen (10) vorbeigeführt sind und den von der Deckscheibe (5, 6) am weitesten entfernten Ring (10) überragen.

2. Kraftstofffilter nach Anspruch 1, **dadurch gekennzeichnet, dass** die Deckscheiben (5, 6) jeweils die Hälfte des Stützkäfigs (8) aufweisen.

3. Kraftstofffilter nach Anspruch 1 oder 2, **dadurch gekennzeichnet, dass** die Deckscheiben (5, 6) identische Formen und Abmessungen aufweisen.

4. Kraftstofffilter nach zumindest einem der vorhergehenden Ansprüche, **dadurch gekennzeichnet, dass** die Streben (9) an ihren freien Enden Führungsstifte (18) aufweisen.

5. Kraftstofffilter nach zumindest einem der vorhergehenden Ansprüche, **dadurch gekennzeichnet, dass** die freien Enden der Streben (9) mit dem mit dem gegenüberliegenden Bauteil korrespondierende Mittel zum Verklemmen oder Verrasten aufweisen.

6. Kraftstofffilter nach zumindest einem der vorhergehenden Ansprüche, **dadurch gekennzeichnet, dass** zumindest eine der Deckscheiben (5, 6) eine zentrische Ausnehmung (12, 13) hat, dass einer der Anschlussstutzen (2, 3) in die zentrische Ausnehmung (12, 13) hineinragt und dass eine Dichtlippe (16, 17) an dem Anschlussstutzen (2, 3) oder der Deckscheibe (5, 6) angeordnet ist und an dem gegenüberliegenden Bauteil anliegt.

7. Kraftstofffilter nach Anspruch 6, **dadurch gekennzeichnet, dass** die zentrische Ausnehmung (12, 13) eine Einführschräge (14, 15) für den Anschlussstutzen (2 - 4) oder einen Verschlussbolzen des Gehäuses (1) aufweist.

8. Kraftstofffilter nach zumindest einem der vorhergehenden Ansprüche, **dadurch gekennzeichnet, dass** das Filtergewebe (7) mit den Deckscheiben (5, 6) verschweißt ist.

## Claims

1. Fuel filter for a motor vehicle, having a filter cloth (7) which is arranged in a filter housing (1) and is retained between two cover discs (5, 6), having a support cage (8) radially supporting the filter cloth (7) and having connecting pieces (2, 3) for connecting lines, wherein at least one of the cover discs (5, 6) is manufactured integrally with at least part of the support cage (8), and wherein that end of the support cage (8) which faces away from the cover disc (5, 6) is manufactured with the other cover disc (5, 6) and/or with a component connected integrally to the other cover disc (5, 6), **characterized in that** the support cage (8) has struts (9) which are arranged essentially vertically on the cover disc (5, 6) and are spaced apart from one another by more than their own width, and rings (10) which are arranged parallel to the cover disc (5, 6), and **in that** the struts (9) are guided radially on the inside or radially on the outside past the rings (10) and protrude over the ring (10) which is furthest away from the cover disc (5, 6).

2. Fuel filter according to Claim 1, **characterized in that** the cover discs (5, 6) each have half of the support cage (8).

3. Fuel filter according to Claim 1 or 2, **characterized in that** the cover discs (5, 6) have identical shapes and dimensions.

4. Fuel filter according to at least one of the preceding claims, **characterized in that** the struts (9) have guide pins (18) at their free ends.

5. Fuel filter according to at least one of the preceding claims, **characterized in that** the free ends of the struts (9) have means corresponding with the opposite component, for clamping or latching them in place.

6. Fuel filter according to at least one of the preceding claims, **characterized in that** at least one of the cover discs (5, 6) has a central recess (12, 13), **in that** one of the connecting pieces (2, 3) projects into the central recess (12, 13), and **in that** a sealing lip (16, 17) is arranged on the connecting piece (2, 3) or the cover disc (5, 6) and bears against the opposite component.

7. Fuel filter according to Claim 6, **characterized in that** the central recess (12, 13) has an introductory slope (14, 15) for the connecting piece (2 - 4) or closure bolt of the housing (1).

8. Fuel filter according to at least one of the preceding claims, **characterized in that** the filter cloth (7) is welded to the cover discs (5, 6).

## Revendications

1. Filtre à carburant pour véhicule automobile, comportant un tissu filtrant (7) disposé dans un boîtier de filtre (1) et maintenu entre deux disques de fermeture (5, 6), une cage support (8) soutenant le tissu filtrant (7) dans le sens radial et des manchons de raccordement (2, 3) pour des conduites de raccordement, au moins l'un des disques de fermeture (5, 6) étant fabriqué en une seule pièce avec au moins une partie de la cage support (8) et l'extrémité de la cage support (8) opposée au disque de fermeture (5, 6) étant fabriquée avec l'autre disque de fermeture (5, 6) et/ou un composant lié en une seule pièce à l'autre disque de fermeture (5, 6), **caractérisé par le fait que** la cage support (8) a des barres de force (9) placées à angle droit sur le disque de fermeture (5, 6) à une distance l'une de l'autre supérieure à leur propre largeur et des anneaux (10) disposés parallèlement au disque de fermeture (5, 6) et que les barres de force (9) passent, radialement à l'intérieur ou radialement à l'extérieur, à côté des anneaux (10) et dépassent l'anneau (10) le plus éloigné du disque de fermeture (5, 6).

2. Filtre à carburant selon la revendication 1, **caractérisé par le fait que** les disques de fermeture (5, 6) comportent chacun la moitié de la cage support (8).

3. Filtre à carburant selon la revendication 1 ou 2, **caractérisé par le fait que** les disques de fermeture (5, 6) ont des formes et des dimensions identiques.

4. Filtre à carburant selon au moins l'une des revendications précédentes, **caractérisé par le fait que** les barres de force (9) ont, à leurs extrémités libres, des pointes de guidage (18).

5. Filtre à carburant selon au moins l'une des revendications précédentes, **caractérisé par le fait que** les extrémités libres des barres de force (9) ont des moyens correspondant au composant se trouvant de l'autre côté pour les coincer ou les encliqueter.

6. Filtre à carburant selon au moins l'une des revendications précédentes, **caractérisé par le fait que** au moins l'un des disques de fermeture (5, 6) a un évidement central (12, 13), que l'un des manchons de raccordement (2, 3) fait saillie dans l'évidement central (12, 13) et qu'une lèvre d'étanchéité (16, 17) est placée sur le manchon de raccordement (2, 3) ou sur le disque de fermeture (5, 6) et s'applique sur le composant se trouvant en face.

7. Filtre à carburant selon la revendication 6, **caractérisé par le fait que** l'évidement central (12, 13) a un biseau d'introduction (14, 15) pour le manchon de raccordement (2 - 4) ou un bouchon d'obturation du boîtier (1).

8. Filtre à carburant selon au moins l'une des revendications précédentes, **caractérisé par le fait que** le tissu filtrant (7) est soudé aux disques de fermeture (5, 6).
